# EUROPÄISCHE PATENTSCHRIFT

(11) **EP 3 384 314 B1**
(45) Veröffentlichungstag und Bekanntmachung des Hinweises auf die Patenterteilung: **06.10.2021**
(21) Anmeldenummer: 16810232.5
(22) Anmeldetag: 01.11.2016
(51) Int. Cl.: G01S 7/539, G01S 15/02

(54) **VERFAHREN ZUM BESTIMMEN EINER OPTIMALEN MEERESTIEFE, SONARANLAGE UND WASSERFAHRZEUG**
METHOD FOR DETERMINING AN OPTIMAL SEA DEPTH, SONAR DEVICE AND WATER VEHICLE
PROCÉDÉ DE DÉTERMINATION D'UN PROFONDEUR DE MER OPTIMAL, SONAR ET VÉHICULE AQUATIQUE

(30) Priorität: 30.11.2015 DE 102015120752
(43) Veröffentlichungstag der Anmeldung: 10.10.2018
(73) Patentinhaber: ATLAS ELEKTRONIK GmbH, 28309 Bremen (DE)
(72) Erfinder: COSTEN, Arno, 28876 Oyten (DE)
(74) Vertreter: thyssenkrupp Intellectual Property GmbH
(86) Internationale Anmeldenummer: PCT/DE2016/100513
(87) Internationale Veröffentlichungsnummer: WO 2017/092728

(56) Entgegenhaltungen:
- DE-C1- 2 143 116
- M B Porter: "The KRAKEN Normal Mode Program", , 22. Mai 1992 (1992-05-22), XP055342925, Gefunden im Internet: URL:http://www.dtic.mil/dtic/tr/fulltext/u 2/a252409.pdf [gefunden am 2017-02-07]
- GRYTHE KNUT ET AL: "Autonomy levels versus communication in an underwater environment", OCEANS 2015 - GENOVA, IEEE, 18 May 2015 (2015-05-18), pages 1-8, XP033205544, DOI: 10.1109/OCEANS-GENOVA.2015.7271482 [retrieved on 2015-09-17]
- J A RUMMEL: "Modern sonar systems guide atom subs", ELECTRONICS, vol. 31, no. 1, 1 January 1958 (1958-01-01), pages 56-62, XP055596812,

## Beschreibung

Die Erfindung betrifft ein Verfahren zum Bestimmen einer optimalen Meerestiefe für ein Orten und/oder ein Verstecken eines Objektes unter Wasser mittels einer Datenverarbeitungseinrichtung und/oder einer Navigationseinrichtung. Des Weiteren betrifft die Erfindung eine Sonaranlage mit einer Antenne zum Senden und/oder Empfangen von Wasserschallsignalen und ein Wasserfahrzeug.

Schall breitet sich im Wasser nicht homogen aus, da die Schallgeschwindigkeit sich innerhalb der Wassersäule und/oder mit der Meerestiefe ändert und der Schall an der Wasseroberfläche und/oder dem Gewässerboden reflektiert oder gebeugt wird. Zudem können je nach Wassertiefe unterschiedliche Wasserströmungen auftreten.

Die Schallausbreitungsgeschwindigkeit ist insbesondere eine Funktion der Dichte, der Temperatur, des Salzgehaltes und des Druckes im Wasser. Maßgebliche Einflussfaktoren sind hierbei die Temperatur und der Druck, wobei die lineare Zunahme des Druckes mit der Meerestiefe bekannt ist. Folglich sind insbesondere die Temperatur und ihre tageszeitlichen und jahreszeitlichen Schwankungen ausschlaggebend bei der Beeinflussung der tiefenabhängigen Schallausbreitungsgeschwindigkeit.

Zur Bestimmung der Schallausbreitungsbewegung unter Wasser existieren verschiedene mathematische und/oder numerische Modelle. Bei Verfahren zur Strahlverfolgung (Ray Tracing) wird die Annahme gemacht, dass Schall sich entlang von Strahlen ausbreitet, welche senkrecht zu Wellenfronten stehen. Für die Berechnung der Schallausbreitung werden beispielsweise das *Kraken Normal Mode Programm* und das *SNAP Modell* verwendet. Ein Überblick über Verfahren zur Schallausbreitung wird gegeben in Siegel M.: Einführung in die Physik und Technik der Unterwasser-Schallsysteme, ATLAS ELEKTRONIK GmbH, 2005, ISBN 3-936799-28-8, Weiteren Stand der Technik bilden DE 21 43 116 C1; M B Porter: "The KRAKEN Normal Mode Program", 22. Mai 1992 (1992-05-22), XP055342925; GRYTHE KNUT ET AL: "Autonomy levels versus communication in an underwater environment",OCEANS 2015 - GENOVA, IEEE, 18. Mai 2015 (2015-05-18), Seiten 1-8, XP033205544,DOI: 10.1109/OCEANS-GENOVA.2015.7271482; J A RUMMEL: "Modern sonar systems guide atom subs",ELECTRONICS, Bd. 31, Nr. 1, 1. Januar 1958 (1958-01-01), Seiten 56-62, XP055596812.

Alle Methoden zum Bestimmen der Bewegungsbahnen von Schall ausgehend von einer Quelle berechnen die Schallausbreitung für jede Wassertiefe. Üblicherweise wird das Geschwindigkeitsprofil eines Meeresgebietes durch einen Satz von Meeresschichten beschrieben, welche unterschiedliche Schallgeschwindigkeiten aufweisen. Hierbei werden gemäß dem Stand der Technik gleich beabstandete Meeresschichten verwendet. Die Ausbreitung des Schalls durch verschiedene Tiefenschichten erfolgt mit verschiedenen Geschwindigkeiten, wobei zusätzlich beim Übergang von einer zur anderen Schicht auch die Richtung des Schalls verändert wird. Beispielsweise werden bei Durchtritt von einer Schicht mit hoher Schallgeschwindigkeit zu einer mit niedriger Schallgeschwindigkeit die Schallwellen zur Vertikalen gebeugt.

Nachteilig bei bestehenden Verfahren zur Schallausbreitung ist, dass die Schallausbreitung für jede äquidistante Meerestiefe ausgerechnet wird. Dadurch besteht ein hoher Rechen- und Zeitaufwand und die Notwendigkeit der Auswertung von einer Vielzahl der ermittelten Daten.

Aufgabe der Erfindung ist es, den Stand der Technik zu verbessern.

Gelöst wird die Aufgabe durch ein Verfahren zum Bestimmen einer optimalen Meerestiefe für ein Orten und/oder ein Verstecken eines Objektes unter Wasser mittels einer Datenverarbeitungseinrichtung und/oder einer Navigationseinrichtung mit folgenden Schritten:
- Auswählen eines Profils einer Schallgeschwindigkeit über einer Meerestiefe für eine Koordinate aus einer Datenbank oder Ermitteln des Profils der Schallgeschwindigkeit über der Meerestiefe für die Koordinate,
- Auswählen von charakteristischen Punkten auf dem Profil der Schallgeschwindigkeit über der Meerestiefe, wobei an den charakteristischen Punkten eine charakteristische und/ oder abrupte Änderung eines Verlaufs des Profils auftritt,
- Durchführen eines Verfahrens zur Schallausbreitungsberechnung mittels eines Algorithmus der Datenverarbeitungseinrichtung und/oder der Navigationseinrichtung für eine Ausbreitung der Schallenergien eines gesendeten und/oder empfangenen Schallsignals an den ausgewählten charakteristischen Punkten,
- Ermitteln eines entfernungsabhängigen Signal/RauschVerhältnis der ermittelten Schallenergien für die ausgewählten charakteristischen Punkte,
- Festlegen der optimalen Meerestiefe aufgrund des Signal/Rausch-Verhältnisses der ermittelten Schallenergien für die Detektion und/oder zum Verstecken eines Objektes Unterwasser.

Somit wird ein Verfahren zum Bestimmen einer optimalen Meerestiefe bereitgestellt, bei dem die optimale Meerestiefe schneller bestimmt werden kann. Dies ist insbesondere wichtig, wenn ein schnelles Orten und/oder ein schnelles Verstecken eines Objektes, beispielsweise eines U-Bootes in der Wassersäule während eines Militäreinsatzes, notwendig ist oder sind.

Zudem kann zeitnah auf abrupte Änderungen der Schallausbreitungsgeschwindigkeit, beispielsweise bei Zustrom von kaltem Wasser, im Untersuchungsbereich reagiert werden.

Wie sich überraschenderweise gezeigt hat, muss nicht für jede (äquidistante) Meerestiefe das Verfahren zur Schallausbreitungsberechnung durchgeführt werden, sondern es ist ausreichend, an charakteristischen Punkten (nicht äquidistant) auf dem Profil der Schallgeschwindigkeit über der Meerestiefe die Ausbreitung der Schallenergien eines gesendeten und/oder empfangenen Schallsignals zu berechnen und für die ermittelten Schallenergien ein optimales Signal/Rausch-Verhältnisses für ein entferntes Objekt zu bestimmen. Folglich kann erheblich schneller die optimale Meerestiefe bestimmt und zeitnaher eine Schallquelle in der Wassersäule entdeckt und/oder ein Wasserfahrzeug in der Wassersäule versteckt werden.

Folgendes Begriffliche sei erläutert:

Die "Meerestiefe" ist insbesondere die Wassertiefe im Meer ausgehend von der gemittelten Wasseroberfläche oder einem anderen Referenzpunkt. Insbesondere gibt die Meerestiefe die Tiefe in der vertikalen Wassersäule an. Die optimale Meerestiefe ist insbesondere die Meerestiefe, in welcher sich ein Wasserfahrzeug und/oder eine Antenne für ein optimales Orten und/oder Verstecken eines Objektes befindet oder befinden.

"Orten" ist insbesondere das Verwenden eines Verfahrens zur Positionsbestimmung eines entfernten Objektes unter Wasser. Zum Orten wird insbesondere ein Sonar verwendet.

Ein "Verstecken" ist insbesondere ein Positionieren eines Objektes an einem Ort unter Wasser, wo dieses akustisch nicht, schlecht oder schlechter detektiert werden kann.

Eine "Datenverarbeitungseinrichtung" ist insbesondere eine Einrichtung zum organisierten Umgang mit Daten mit dem Ziel, Informationen über diese Daten zu gewinnen und/oder diese Daten zu verändern. In der Datenverarbeitungseinrichtung werden insbesondere Datensätze erfasst, nach vorgegebenen Verfahren verarbeitet und als Ergebnis ausgegeben. Mit der Datenverarbeitungseinrichtung wird insbesondere ein Verfahren zur Schallausbreitungsberechnung durchgeführt und eine Ausbreitung von Schallenergien mittels eines Algorithmus berechnet. Insbesondere umfasst eine Datenverarbeitungs-einrichtung einen Computer.

Eine "Navigationseinrichtung" ist insbesondere eine Einrichtung zum Steuern eines Fahrzeuges zum gewünschten Zielpunkt. Eine Navigationseinrichtung verwendet zum Steuern insbesondere die momentane Position (Ortsbestimmung) des Fahrzeuges und die Ermittlung der besten Route zum Zielpunkt. Insbesondere weist eine Navigationseinrichtung auch eine oben beschrieben Datenverarbeitungseinrichtung auf.

Ein "Profil einer Schallgeschwindigkeit über eine Meerestiefe" ist insbesondere der Verlauf der Schallgeschwindigkeit über der Meerestiefe für eine bestimmte Koordinate. Das Profil einer Schallgeschwindigkeit über einer Meerestiefe kann insbesondere einer Datenbank entnommen werden, wobei insbesondere auf die jahreszeitliche Abhängigkeit geachtet werden kann, oder das Profil kann messtechnisch ermittelt werden. Aufgrund der Temperaturabhängigkeit und des Temperaturverlaufes über einen Tag ist insbesondere ein Ermitteln des Profils direkt vor Ort genauer als die Entnahme der entsprechenden Daten aus einer Datenbank. Das Profil der aktuellen Schallgeschwindigkeit über der Meerestiefe an einem Ort kann insbesondere mit einem Sonarsystem bestimmt werden und führt zu einem genauen bathymetrischen Ergebnis.

Eine "Koordinate" gibt insbesondere die Lage eines Punktes in einem Raum und/oder unter Wasser an.

Ein "charakteristischer Punkt" ist insbesondere ein Punkt auf dem Profil der Schallgeschwindigkeit über der Meerestiefe, an dem eine charakteristische und/oder abrupte Änderung des Verlaufsprofils auftritt. Bei einem charakteristischen Punkt kann es sich insbesondere um ein (lokales) Minimum und/oder ein (lokales) Maximum und/oder einen (lokalen) Wendepunkt und/oder und/oder (lokalen) Sattelpunkt um einen Schnittpunkt einer Tangente an dem kurvenförmigen Verlauf des Profils und/oder um einen anderen Extremwert handeln. Insbesondere sind mehrere charakteristische Punkte zueinander dadurch gekennzeichnet, dass diese nicht äquidistant sind oder äquidistante Meeresschichten zur Berechnung vorgeben, sondern vom Verlauf des Profils vorgegeben an Meerestiefen liegen, an denen eine schlagartige oder herausstehende oder charakteristische Änderung der Schallgeschwindigkeit erfolgt. Insbesondere für die charakteristischen Punkte wird jeweils das Verfahren zur Schallausbreitungsberechnung durchgeführt.

Ein "Verfahren zur Schallausbreitungsberechnung" ist insbesondere das Anwenden eines auf der Aussendung von Schallenergie basierenden Algorithmus zur Berechnung der Schallausbreitung und somit zur Ermittlung der akustischen Detektierbarkeit von Objekten von einem bestimmten Punkt im Raum und/oder unter Wasser aus. Für das Verfahren zur Schallausbreitungsberechnung werden insbesondere unterschiedliche Modelle, beispielsweise das *Kraken Normal Mode Programm* und das *SNAP Modell* verwendet. Diese Modenmodelle sind insbesondere für tiefe Frequenzen und/oder in sehr flachem Wasser zu bevorzugen. Bei extrem flachem Wasser und/oder tiefen Frequenzen, bei denen nicht mal mehr eine halbe Wellenlänge (Wellenlänge lambda = mittlere Wasserschallgeschwindigkeit cw / Signalfrequenz f) in die vertikale Wassersäule (Meeresoberfläche bis zum festen Meeresuntergrund) passt, können insbesondere die Modenmodelle nicht mehr verwendet werden. Im Tiefwasser oder bei hohen Frequenzen sind Strahlenverfolgungsmodelle wie *SAMT, Hodgson oder MSM* besser geeignet. Für die Anwendung von Strahlverfolgungsmodellen gilt insbesondere die Voraussetzung, dass mehr als zehn Wellenlängen (Wellenlänge lambda = mittlere Wasserschallgeschwindigkeit cw / Signalfrequenz f) in die vertikale Wassersäule (Meeresoberfläche bis zum Meeresboden) passen müssen. Zudem umfasst das Verfahren zur Schallausbreitungsberechnung insbesondere auch Erweiterungen, welche den weiteren Weg der Schallenergie nach einem Auftreffen auf Oberflächen berechnen und/oder berücksichtigen. Hierzu können zusätzlich insbesondere unterschiedliche Modelle zur Berücksichtigung der Vorwärts- und/oder Rückwartsdämpfung und/oder Vorwärts- und/oder Rückwärtsstreuung an der Meeresoberfläche und/oder dem Meeresboden verwendet werden. Insbesondere kann das Verfahren zur Schallausbreitungsberechnung zur Berechnung des Schallweges durch ein Meer über lange Distanzen verwendet werden, wobei eine Zwischenschicht im Meer, in der beispielsweise dort ausgesandter Wasserschall sich über weite Strecken ausbreiten kann (SOFAR-Kanal als Zwischenschicht im Ozean), und/oder Reflexionen und/oder Beugungen an der Meeresoberfläche und dem Meeresboden insbesondere berücksichtigt werden. Daraus können insbesondere Bereiche mit hoher und niedriger Schallsignalintensität berechnet und für ein Orten und/oder ein Verstecken eines Objektes unter Wasser verwendet werden. Entgegen dem Stand der Technik werden im Verfahren zur Schallausbreitungsberechnung nicht alle äquidistanten Meerestiefen verwendet, sondern nur die Meerestiefen an den charakteristischen Punkten und/oder Zwischenpunkten auf dem Profil der Schallgeschwindigkeit über der Meerestiefe. Dazu werden ausgehend von der bekannten Schallgeschwindigkeit als Funktion der Meerestiefe und/oder Temperatur insbesondere die Winkel, durch welche die Schallenergien beim Passieren von verschiedenen Tiefen gebeugt werden, nur an den Tiefen der charakteristischen Punkte und/oder Zwischenpunkte berechnet und die Schallenergien ausschließlich für die charakteristischen Punkte und/oder Zwischenpunkte dargestellt.

Eine "Schallenergie" ist insbesondere die in einem Schallfeld oder einem Schallereignis enthaltene Energie. Die Schallenergie eines Schallfeldes ist insbesondere als Summe aus kinetischer und potentieller Energie der Schallwellen berechnen.

Mit "Schallausbreitung" wird insbesondere die Wellenerscheinung bezeichnet, welche zur Fortpflanzung einer Druckstörung sowie der Übertragung des Schallwechseldrucks in einem Schallfeld führt. Beispielsweise können die sich ausbreitenden Schallwellen nach einem Strahlenverfolgungsmodell berechnet und als Schallstrahlen dargestellt werden, wobei ein Schallstrahl insbesondere die Ausbreitung von Schall als Strahl senkrecht zur Wellenfront darstellt.

Das "Signal/Rausch-Verhältnis" (auch "Störabstand" oder "Rauschabstand" genannt) ist insbesondere ein Maß für die technische Qualität eines Nutzsignals, welches von einem Rauschsignal überlagert ist. Das Signal/RauschVerhältnis ist insbesondere definiert als das Verhältnis der mittleren Leistung des Nutzsignals zur mittleren Rauschleistung des Störsignals. Bei dem Signal/RauschVerhältnis handelt es sich insbesondere um ein entfernungsabhängiges Signal/Rausch-Verhältnis der ermittelten Schallenergien für die ausgewählten charakteristischen Punkte und/oder Zwischenpunkte. Zum Verstecken eines Objektes wird insbesondere ein "schlechtes" Signal/Rausch-Verhältnis und zum Orten eines Objektes ein "gutes" Signal/Rausch-Verhältnis der ermittelten Schallenergien verwendet.

In einer weiteren Ausgestaltungsform des Verfahren wird oder werden zusätzlich ein Zwischenpunkt oder mehrere Zwischenpunkte mit unterschiedlichen oder gleichen Abständen zwischen den charakteristischen Punkten auf dem Profil der Schallgeschwindigkeit über der Meerestiefe ausgewählt, sodass das Durchführen des Verfahrens zur Schallausbreitungsberechnung und das Ermitteln eines entfernungsabhängigen Signal/Rausch-Verhältnis der ermittelten Schallenergien zusätzlich an dem ausgewählten Zwischenpunkt oder den ausgewählten Zwischenpunkten erfolgt.

Dadurch kann durch die gezielte Wahl von Zwischenpunkten die Qualität des Verfahrens zur Schallausbreitungsberechnung und somit das Verfahren zum Orten und/oder Verstecken eines Objektes verbessert werden.

Somit können beispielsweise im Bereich der Schlepptiefe einer Schleppantenne zusätzliche Zwischenpunkte gewählt und dadurch die Genauigkeit in diesen Bereich der Meerestiefe verbessert werden.

Ebenso kann in einem Bereich der Meerestiefe, in dem ein Objekt vermutet wird, durch zusätzliche Zwischenpunkte die Ortungswahrscheinlichkeit verbessert werden.

Ein "Zwischenpunkt" ist insbesondere ein Punkt auf dem Profil der Schallgeschwindigkeit über der Meerestiefe, welcher zwischen zwei charakteristischen Punkten mit gleichem oder unterschiedlichem Abstand zu diesen charakteristischen Punkten und/oder zwischen einem charakteristischen Punkt und einem anderen Zwischenpunkt mit beliebigem Abstand liegt. Durch die gezielte Wahl von einem Zwischenpunkt oder mehreren Zwischenpunkten kann insbesondere das Ergebnis des Verfahrens zur Schallausbreitungsberechnung für eine bestimmte Meerestiefe verbessert werden.

Durch Berechnen eines Weges der Schallenergien nach Auftreffen auf einem Meeresboden und/oder einer Meeresoberfläche wird eine Struktur des Meeresbodens und/oder der Meeresoberfläche in dem Verfahren zur Schallausbreitungsberechnung berücksichtigt.

Somit wird auch die Reflexion und/oder Beugung der Schallenergie an einer Meeresoberfläche und/oder am Meeresboden berücksichtigt und das Ergebnis des Verfahrens zur Schallausbreitungsberechnung verbessert.

In einer weiteren Ausgestaltungsform umfasst das Verfahren zur Schallausbreitungsberechnung in einem flachen Meer, in welchem insbesondere zehn Wellenlängen des Schallsignals größer als die Meerestiefe sind, Modengleichung und/oder Wellenrechnungen.

Somit kann auch die Ausbreitung und/oder Beugung und/oder Reflexion von Schall mit großen Wellenlängen, welche gegenüber der geringeren Tiefe von flachem Gewässer nicht vernachlässigt werden können, berücksichtigt werden.

Unter "Modengleichungen" werden insbesondere Gleichungen zur Beschreibung der Ausbreitung von vertikal stehenden und horizontal fortlaufenden Wellen hinsichtlich ihrer Energieverteilung in verschiedenen Richtungen verstanden.

Unter "Wellenrechnungen" werden insbesondere Berechnungen der Ausbreitung von Schallwellen nach den Wellengleichungen verstanden. Die Modengleichungen stellen eine Lösung der Wellengleichungen dar.

In einem weiteren Aspekt der Erfindung wird die Aufgabe gelöst durch eine Sonaranlage mit einer Antenne zum Senden und/oder Empfangen von Wasserschallsignalen, wobei der Sonaranlage eine Datenverarbeitungseinrichtung zugeordnet ist, und mittels der Sonaranlage ein zuvor beschriebenes Verfahren durchführbar ist, sodass eine optimale Meerestiefe der Antenne zum Senden und/oder Empfangen von Wasserschallsignalen für ein Orten und/oder ein Verstecken eines Objektes unter Wasser bestimmbar ist.

Somit wird eine Sonaranlage bereitgestellt, mit welcher sehr schnell und exakt die optimale Meerestiefe für den Einsatz der Antenne bestimmt werden kann. Somit kann schneller und exakter ein Orten und/oder ein Verstecken eines Objektes unter Wasser erfolgen.

Des Weiteren kann zeitnah auf die Bewegung eines Objektes unter Wasser reagiert und die Antenne einer Sonaranlage entsprechend unter Wasser nachgeführt werden. Insbesondere kann mehrmals innerhalb kurzer Zeit die optimale Meerestiefe bestimmt und die Position einer Antenne zum Senden und/oder Empfangen von Wasserschallsignalen korrigiert werden.

Unter "Sonaranlage" wird eine Anlage zum Orten von Gegenständen im Raum und/oder unter Wasser mittels empfangener und/oder ausgesandter Schallsignale verstanden. Dabei handelt es sich insbesondere um eine aktive Sonaranlage, welche selbst ein Signal ausstrahlt, oder um eine passive Sonaranlage, welche nur ausgestrahlte Schallsignale empfängt. Ebenso kann es sich hierbei um ein bi- oder multistatisches Sonar handeln, welches gleichzeitig auf verschiedenen Plattformen senden und empfangen kann. Insbesondere weist eine Sonaranlage eine Antenne oder mehrere Antennen auf.

Eine "Antenne" ist insbesondere eine technische Vorrichtung zum Senden und/oder Empfangen von Schallsignalen. Dazu weist eine Antenne insbesondere einen oder mehrere Schallwandler und/oder Hydrophone auf. Bei einer Antenne kann es sich insbesondere um eine Schleppantenne handeln, welche eine elastische, schlauchförmige Hülle aufweist, in welcher insbesondere mehrere Hydrophone angeordnet sind. Die Antenne ist insbesondere Bestandteil eines passiven Sonars und/oder der akustische Empfangsteil eines aktiven Sonars.

In einem zusätzlichen Aspekt der Erfindung wird die Aufgabe gelöst durch ein Wasserfahrzeug, insbesondere ein U-Boot, welches eine Sonaranlage und/oder eine Datenverarbeitungseinrichtung und/oder eine Navigationseinrichtung und/oder eine zuvor beschriebene Sonaranlage aufweist, wobei mittels des Wasserfahrzeuges ein zuvor beschriebenes Verfahren durchführbar ist, sodass eine Ortungswahrscheinlichkeit eines Objektes in einer Zielposition erhöht und/oder die Ortungswahrscheinlichkeit eines versteckten Objektes, insbesondere des Wasserfahrzeuges selbst, erniedrigt wird.

Somit wird ein Wasserfahrzeug bereitgestellt, welches sich schnell und sicher innerhalb der Wassersäule im Meer verstecken kann, sodass seine Ortungswahrscheinlichkeit herabgesetzt wird und ebenso wird ein Wasserfahrzeug bereitgestellt, mit dem sehr schnell und exakt die Zielposition eines Objektes detektiert werden kann.

Folglich kann mit diesem Wasserfahrzeug sehr schnell auf sich ändernde Situationen und/oder Bewegungen von Objekten unter Wasser reagiert und somit die Sicherheit des Wasserfahrzeuges verbessert werden.

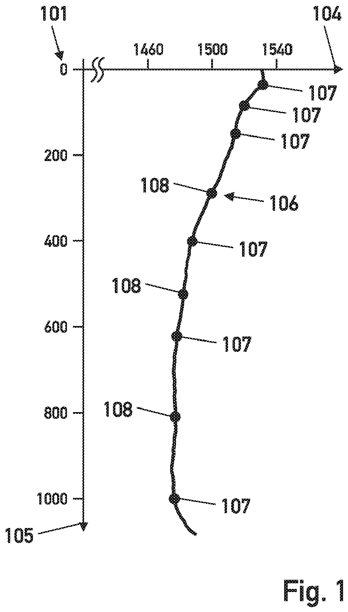

Im Weiteren wird die Erfindung anhand von Ausführungsbeispielen näher erläutert. Es zeigen
- Figur 1: ein Profil einer Schallausbreitungsgeschwindigkeit über einer Meerestiefe,

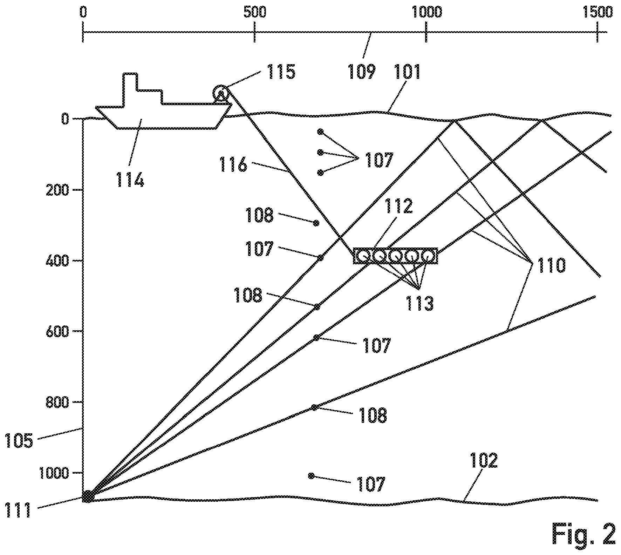

- Figur 2: eine schematische Darstellung der Ausbreitung von von einem Pinger ausgesandten Schallstrahlen über die Meerestiefe und einer Reichweite sowie ein Schleppschiff mit einer Schleppantenne, und

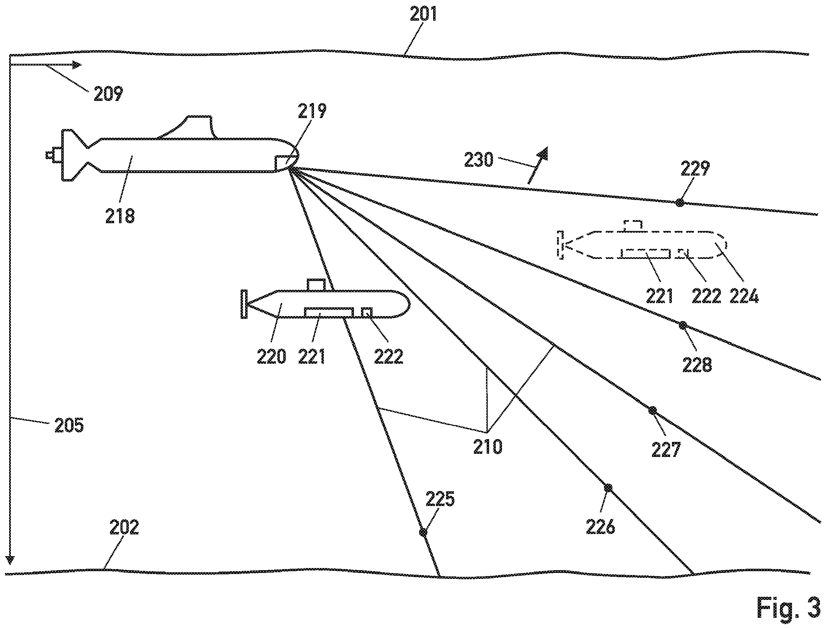

- Figur 3: eine schematische Darstellung des Versteckens eines von einem anderen U-Boot georteten U-Bootes.

Das Profil 106 der Schallausbreitungsgeschwindigkeit 104 über der Meerestiefe 105 wurde mit einem Sonar experimentell an einer Position im Indischen Ozean ermittelt. An einer Meeresoberfläche 101 ist die Schallausbreitungsgeschwindigkeit 104 zunächst innerhalb der ersten Meter einer Wassersäule konstant, nimmt dann bis auf eine Meerestiefe von 1.000m ab und steigt anschließend in der Nähe des Meeresbodens 102 wieder an. Auf dem Profil 106 der Schallausbreitungsgeschwindigkeit 104 über der Meerestiefe 105 sind sieben charakteristische Punkte 107 mit den entsprechenden Meerestiefen ausgewählt, wobei lokale Maxima und Minima durch mathematische Differenzierung gewonnen wurden. Zudem sind drei Zwischenpunkte 108 zwischen den charakteristischen Punkten 107 in Meerestiefen zwischen 200 und 800m ausgewählt.

Ein Pinger 111 sitzt am Meeresboden 102 zur Kennzeichnung eines identifizierten und in einer nicht gezeigten Reichweite 109 bei -3.000m beginnenden Seeminengebietes. Ein Schleppschiff 104 (nicht maßstabsgetreue dargestellt) befindet sich an der Wasseroberfläche 101.

Der Pinger 111 sendet mit einer kugelförmigen Richtcharakteristik Schallsignale aus. Für die ausgewählten charakteristischen Punkte 107 und Zwischenpunkte 108 wird mittels eines Algorithmus der Navigationseinrichtung des Schleppschiffes 114 unter Verwendung des *KRAKEN-Modells* eine Ausbreitung der Schallstrahlen durch die charakteristischen Punkte 107 und die Zwischenpunkte 108 berechnet und dargestellt. Die ermittelten Schallstrahlen 110 durchlaufen vom Pinger 111 aus nur die charakteristischen Punkte 107 und die Zwischenpunkte 108 im Bereich einer Meerestiefe 105 von 400 bis 1.000m.

Ausgehend von dem Pinger 111 breiten sich die ermittelten Schallstrahlen 110 ab 1.000m Meerestiefe 105 mit langsamerer Schallausbreitungsgeschwindigkeit 104 aus und werden somit weg von der Vertikalen gebeugt. Dies führt zu einer umlaufenden Verdeckungszone oberhalb des Pingers 111, sodass das Schleppschiff 114 und die drei obersten charakteristischen Punkte 107 und der oberste Zwischenpunkt 108 nicht von den ermittelten Schallstrahlen 110 getroffen werden. Die ermittelten Schallstrahlen 110 erreichen erst ab einer Reichweite 109 von über 1.000m die Wasseroberfläche 101 und werden reflektiert.

Aufgrund der ermittelten Schallstrahlen 110 und deren guten, entfernungsabhängigen Signal/Rausch-Verhältnissen bringt das Schleppschiff 114 über eine Winde 115 und ein Schleppkabel 116 eine Schleppantenne 112 (nicht maßstabsgetreu dargestellt) in einer Reichweite 109 von 750m und einer Meerestiefe 105 von 400m aus. Die Schleppantenne 112 weist mehrere Hydrophone 113 zum Empfangen der vom Pinger 111 ausgesandten Schallsignale aus. Somit ist die Schleppantenne 112 in eine optimale Meerestiefe 105 zum Orten des Pingers 111 und zum frühzeitigen Erkennen des Seeminengebietes in 3.750m Entfernung gebracht worden.

In einem Meeresgebiet befindet sich ein erstes U-Boot 218 und ein zweites U-Boot 220 in unterschiedlichen Meerestiefen 205. Das erste U-Boot 218 weist ein aktives Bugsonar 219 und das zweite U-Boot 220 auf beiden Seiten ein Seitenantennensonar 221 und eine Navigationseinheit 222 auf.

Das zweite U-Boot 220 registriert, dass es vom aktiven Bugsonar 219 des ersten U-Bootes detektiert worden ist. Daraufhin wird ein Profil einer Schallgeschwindigkeit über der Meerestiefe 205 für dieses Meeresgebiet aus einer Datenbank der Navigationseinheit 222 des zweiten U-Bootes 220 und fünf charakteristische Punkte auf diesem Profil ausgewählt.

Zu den Meerestiefen der fünf ausgewählten charakteristischen Punkte 225, 226, 227, 228 und 229 werden X-Koordinaten für ein schnelles Verstecken vorgegeben und ausgehend von der vermuteten Position des aktiven Bugsonars 219 des ersten U-Bootes 218 wird ein Verfahren zur Schallausbreitungsberechnung mittels eines Algorithmus unter Verwendung des SNAP-Modells zum Bestimmen der Ausbreitung der Schallenergien 210 durch die fünf charakteristischen Punkten 225, 226, 227, 228 und 229 in der Navigationseinheit 222 berechnet. Anschließend werden die entfernungsabhängigen Signal/Rausch-Verhältnisse der ermittelten Schallenergien 210 berechnet. Aufgrund der schlechten Signal/Rausch-Verhältnisse der ermittelten Schallenergien durch die Meerestiefen der charakteristischen Punkte 228 und 229 fährt das zweite U-Boot 220 mit Hilfe der Navigationseinheit 222 an die gestrichelt gezeigte versteckte Position 224 zwischen den Meerestiefen der charakteristischen Punkte 228 und 229, welche nur gering unterhalb der Schattenzone 230 liegen. Somit hat das zweite U-Boot 220 schnell und ohne hohen Datenhandhabungs- und Rechenaufwand eine Position mit einer optimalen Meerestiefe zum Verstecken bestimmt und eingenommen.

### Bezugszeichenliste

- 101: Meeresoberfläche
- 102: Meeresboden
- 104: Schallausbreitungsgeschwindigkeit (in m/s)
- 105: Meerestiefe (in m)
- 106: Profil der Schallausbreitungsgeschwindigkeit über der Meerestiefe
- 107: charakteristische Punkte auf dem Profil der Schallausbreitungsgeschwindigkeit über der Meerestiefe
- 108: Zwischenpunkte auf dem Profil der Schallausbreitungsgeschwindigkeit über der Meerestiefe
- 109: Reichweite (in m)
- 110: ermittelte Schallstrahlen
- 111: Pinger
- 112: Schleppantenne
- 113: Hydrophon
- 114: Schleppschiff
- 115: Winde
- 116: Schleppkabel
- 201: Meeresoberfläche
- 202: Meeresboden
- 205: Meerestiefe
- 209: X-Koordinate
- 210: ermittelte Schallenergien
- 218: erstes U-Boot
- 219: aktives Bugsonar
- 220: zweites U-Boot
- 221: Seitenantennensonar
- 222: Navigationseinheit
- 224: versteckte Position des zweiten U-Bootes
- 225: Meerestiefe des ersten ausgewählten charakteristischen Punktes
- 226: Meerestiefe des zweiten ausgewählten charakteristischen Punktes
- 227: Meerestiefe des dritten ausgewählten charakteristischen Punktes
- 228: Meerestiefe des vierten ausgewählten charakteristischen Punktes
- 229: Meerestiefe des fünften ausgewählten charakteristischen Punktes
- 230: Schattenzone

## Patentansprüche

1. Verfahren zum Bestimmen einer optimalen Meerestiefe für ein Orten und/oder ein Verstecken eines Objektes (111, 220) unter Wasser mittels einer Datenverarbeitungseinrichtung und/oder einer Navigationseinrichtung (222) mit folgenden Schritten:
- Auswählen eines Profils (106) einer Schallgeschwindigkeit (104) über einer Meerestiefe (105, 205) für eine Koordinate aus einer Datenbank oder Ermitteln des Profils der Schallgeschwindigkeit über der Meerestiefe für die Koordinate,
- Auswählen von charakteristischen Punkten (107) auf dem Profil der Schallgeschwindigkeit über der Meerestiefe, wobei an den charakteristischen Punkten (107) eine charakteristische und/oder abrupte Änderung eines Verlaufs des Profils (106) auftritt,
- Durchführen eines Verfahrens zur Schallausbreitungsberechnung mittels eines Algorithmus der Datenverarbeitungseinrichtung und/oder der Navigationseinrichtung für eine Ausbreitung der Schallenergien (110, 210) eines gesendeten und/oder empfangenen Schallsignals an den ausgewählten charakteristischen Punkten,
- Ermitteln eines entfernungsabhängigen Signal/RauschVerhältnis der ermittelten Schallenergien für die ausgewählten charakteristischen Punkte,
- Festlegen der optimalen Meerestiefe aufgrund des Signal/Rausch-Verhältnisses der ermittelten Schallenergien für die Detektion und/oder zum Verstecken eines Objektes unter Wasser.

2. Verfahren nach Anspruch 1, **dadurch gekennzeichnet, dass** zusätzlich ein Zwischenpunkt oder mehrere Zwischenpunkte (108) mit unterschiedlichen oder gleichen Abständen zwischen den charakteristischen Punkten auf dem Profil der Schallgeschwindigkeit über der Meerestiefe ausgewählt wird oder werden, sodass das Durchführen des Verfahrens zur Schallausbreitungsberechnung und das Ermitteln eines entfernungsabhängigen Signal/Rausch-Verhältnis der ermittelten Schallenergien zusätzlich an dem ausgewählten Zwischenpunkt oder den ausgewählten Zwischenpunkten erfolgt.

3. Verfahren nach einem der vorherigen Ansprüche, **dadurch gekennzeichnet, dass** eine Struktur eines Meeresbodens (102, 202) und/oder einer Meeresoberfläche (101, 201) in dem Verfahren zur Schallausbreitungsberechnung durch Berechnen eines Weges der Schallenergien nach Auftreffen auf dem Meeresboden und/oder der Meeresoberfläche berücksichtigt wird.

4. Verfahren nach einem der vorherigen Ansprüche, **dadurch gekennzeichnet, dass** in einem flachen Meer, in welchem zehn Wellenlängen des Schallsignals größer als die Meerestiefe sind, das Verfahren zur Schallausbreitungsberechnung Modengleichungen und/oder Wellenrechnungen umfasst.

5. Sonaranlage (219, 221) mit einer Antenne (112) zum Senden und/oder Empfangen von Wasserschallsignalen, wobei der Sonaranlage eine Datenverarbeitungseinrichtung zugeordnet ist, **dadurch gekennzeichnet, dass** mittels der Sonaranlage ein Verfahren nach einem der Ansprüche 1 bis 4 durchführbar ist, sodass eine optimale Meerestiefe der Antenne zum Senden und/oder Empfangen von Wasserschallsignalen für ein Orten und/oder ein Verstecken eines Objektes unter Wasser bestimmbar ist.

6. Wasserfahrzeug (114), insbesondere ein U-Boot (218, 220), welches eine Sonaranlage und/oder eine Datenverarbeitungseinrichtung und/oder eine Navigationseinrichtung und/oder eine Sonaranlage nach Anspruch 5 aufweist, **dadurch gekennzeichnet, dass** mittels des Wasserfahrzeuges ein Verfahren nach einem der Ansprüche 1 bis 4 durchführbar ist, sodass eine Ortungswahrscheinlichkeit eines Objektes in einer Zielposition erhöht und/oder die Ortungswahrscheinlichkeit eines versteckten Objektes, insbesondere des Wasserfahrzeuges selbst, erniedrigt wird.

## Claims

1. Method for determining an optimum sea depth for locating and/or concealing an object (111, 220) underwater by way of a data processing device and/or a navigation device (222), comprising the following steps:
- selecting a profile (106) of a speed of sound (104) at a sea depth (105, 205) for a coordinate from a database or ascertaining the profile of the speed of sound at the sea depth for the coordinate,
- selecting characteristic points (107) on the profile of the speed of sound at the sea depth, wherein a characteristic and/or abrupt change of a course of the profile (106) occurs at the characteristic points (107),
- performing a sound propagation calculation method by way of an algorithm of the data processing device and/or of the navigation device for propagation of the acoustic energies (110, 210) of a transmitted and/or received acoustic signal at the selected characteristic points,
- ascertaining a distance-dependent signal-to-noise ratio of the ascertained acoustic energies for the selected characteristic points,
- defining the optimum sea depth on the basis of the signal-to-noise ratio of the ascertained acoustic energies for detecting and/or for concealing an object underwater.

2. Method according to Claim 1, **characterized in that** an intermediate point or a plurality of intermediate points (108) with different or identical distances between the characteristic points on the profile of the speed of sound at the sea depth is or are additionally selected, such that the sound propagation calculation method is additionally performed and the ascertaining of a distance-dependent signal-to-noise ratio of the ascertained acoustic energies is additionally performed at the selected intermediate point or the selected intermediate points.

3. Method according to either of the preceding claims, **characterized in that** a structure of a seabed (102, 202) and/or of a sea surface (101, 201) is taken into account in the sound propagation calculation method by calculating a path of the acoustic energies following impingement on the seabed and/or the sea surface.

4. Method according to one of the preceding claims, **characterized in that**, in a shallow sea in which ten wavelengths of the acoustic signal are greater than the sea depth, the sound propagation calculation method comprises mode equations and/or wave calculations.

5. Sonar system (219, 221) having an antenna (112) for transmitting and/or receiving waterborne acoustic signals, wherein the sonar system is assigned a data processing device, **characterized in that** the sonar system is able to perform a method according to one of Claims 1 to 4 such that it is possible to determine an optimum sea depth of the antenna for transmitting and/or receiving waterborne acoustic signals for locating and/or concealing an object underwater.

6. Watercraft (114), in particular a submarine (218, 220), comprising a sonar system and/or a data processing device and/or a navigation device and/or a sonar system according to Claim 5, **characterized in that** the watercraft is able to perform a method according to one of Claims 1 to 4, such that a probability of an object being located at a target position is increased and/or the probability of a concealed object, in particular the watercraft itself, being located is reduced.

## Revendications

1. Procédé de détermination d'une profondeur de mer optimale pour une localisation et/ou une dissimulation d'un objet (111, 220) sous l'eau au moyen d'un dispositif de traitement de données et/ou d'un dispositif de navigation (222), comprenant les étapes suivantes :
- sélection d'un profil (106) d'une vitesse du son (104) au-dessus d'une profondeur de mer (105, 205) pour une coordonnée à partir d'une base de données ou identification du profil de la vitesse du son au-dessus de la profondeur de mer pour la coordonnée,
- sélection de points caractéristiques (107) sur le profil de la vitesse du son au-dessus de la profondeur de mer, une modification caractéristique et/ou soudaine d'un tracé du profil (106) se produisant au niveau des points caractéristiques (107),
- mise en œuvre d'un procédé de calcul de la propagation du bruit au moyen d'un algorithme du dispositif de traitement de données et/ou du dispositif de navigation pour une propagation des énergies acoustiques (110, 210) d'un signal sonore émis et/ou reçu au niveau des points caractéristiques sélectionnés,
- identification d'un rapport signal/bruit dépendant de la distance des énergies acoustiques identifiées pour les points caractéristiques sélectionnés,
- spécification de la profondeur de mer optimale en s'appuyant sur le rapport signal/bruit des énergies acoustiques identifiées pour la détection et/ou pour la dissimulation d'un objet sous l'eau.

2. Procédé selon la revendication 1, **caractérisé en ce qu'**un point intermédiaire ou plusieurs points intermédiaires (108) ayant des écarts différents ou égaux entre les points caractéristiques est ou sont en plus sélectionné (s) sur le profil de la vitesse du son au-dessus de la profondeur de mer, de sorte que la mise en œuvre du procédé de calcul de la propagation du bruit et l'identification d'un rapport signal/bruit dépendant de la distance des énergies acoustiques identifiées sont en plus réalisés au niveau du point intermédiaire sélectionné ou des points intermédiaires sélectionnés.

3. Procédé selon l'une des revendications précédentes, **caractérisé en ce qu'**une structure d'un fond de mer (102, 202) et/ou d'une surface de la mer (101, 201) est prise en compte dans le procédé de calcul de la propagation du bruit en calculant un trajet des énergies acoustiques après l'incidence sur le fond de mer et/ou la surface de la mer.

4. Procédé selon l'une des revendications précédentes, **caractérisé en ce que** dans une mer plate, dans laquelle dix longueurs d'onde du signal sonore sont supérieures à la profondeur de mer, le procédé de calcul de la propagation du bruit comprend des équations de mode et/ou des calculs d'ondes.

5. Équipement sonar (219, 221), comprenant une antenne (112) destinée à émettre et/ou à recevoir des signaux sonores transmis par l'eau, un dispositif de traitement de données étant associé à l'équipement sonar, **caractérisé en ce qu'**un procédé selon l'une des revendications 1 à 4 peut être mis en œuvre au moyen de l'équipement sonar, de sorte qu'une profondeur de mer optimale de l'antenne destinée à émettre et/ou à recevoir des signaux sonores transmis par l'eau peut être déterminée pour une localisation et/ou une dissimulation d'un objet sous l'eau.

6. Navire (114), notamment un sous-marin (218, 220), qui possède un équipement sonar et/ou un dispositif de traitement de données et/ou un dispositif de navigation et/ou un équipement sonar selon la revendication 5, **caractérisé en ce qu'**un procédé selon l'une des revendications 1 à 4 peut être mis en œuvre au moyen du navire, de sorte qu'une probabilité de localisation d'un objet dans une position cible est augmentée et/ou la probabilité de localisation d'un objet dissimulé, notamment du navire lui-même, est réduite.
